Europäisches Patentamt

European Patent Office

Office européen des brevets

(11) Veröffentlichungsnummer: **0 431 367 A2**

# (12) EUROPÄISCHE PATENTANMELDUNG

(21) Anmeldenummer: 90121934.5

(22) Anmeldetag: 16.11.90

(51) Int. Cl.5: **B23D 35/00**

(30) Priorität: 07.12.89 DE 3940511

(43) Veröffentlichungstag der Anmeldung:
12.06.91 Patentblatt 91/24

(84) Benannte Vertragsstaaten:
BE DE FR GB

(71) Anmelder: Oxytechnik Ges. für Systemtechnik mbH
Frankfurter Strasse 10
W-6236 Eschborn 1(DE)

(72) Erfinder: Bauer, Helmut
Roedmühlstrasse 27a
W-6367 Karben 6(DE)

(74) Vertreter: Roesner, Werner
MESSER GRIESHEIM GmbH, Patentabteilung,
Hanauer Landstrasse 330, PF 101530
W-6230 Frankfurt 1(DE)

(54) Einstelleinrichtung für Untermesser einer Schere in einer Band- oder Blechplatten-Schweissanlage.

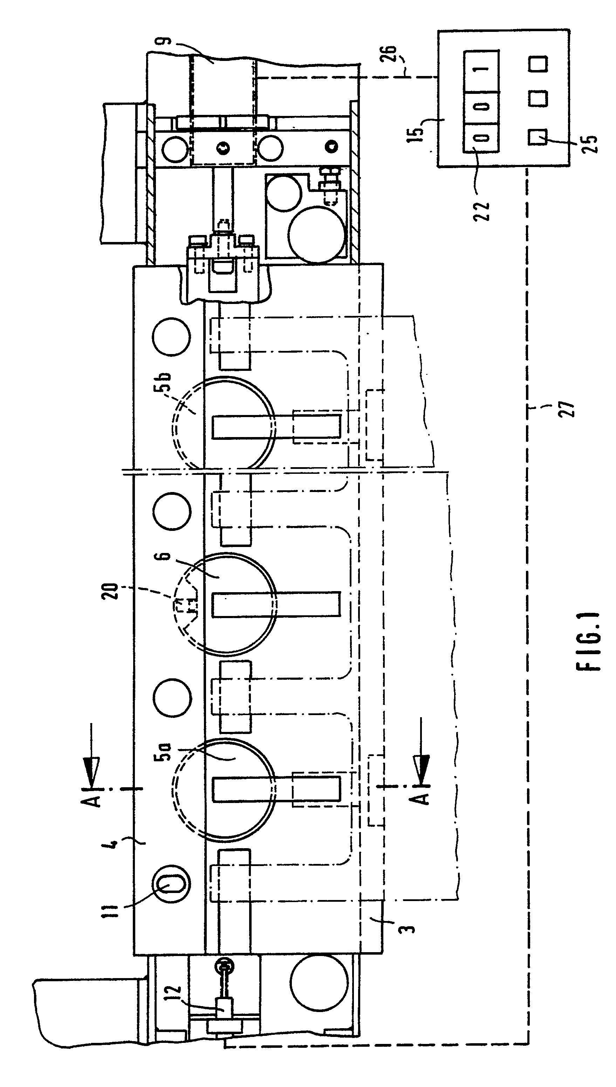

(57) Die Erfindung betrifft eine Einstelleinrichtung für Untermesser einer Schere in einer Band- oder Blechplatten-Schweißanlage, bei der zur Steigerung der Qualität der Schnittkanten der Bänder oder Bleche ohne manuellen Eingriff in die Maschine jedes Untermesser (4) mit einer Verschiebeeinheit spielfrei in Verbindung steht, die von einem Steuergerät (15) aus über einen Antrieb (9) verschiebbar ist (Fig. 1).

FIG.1

## EINSTELLEINRICHTUNG FÜR UNTERMESSER EINER SCHERE IN EINER BAND- ODER BLECHPLATTEN-SCHWEISSANLAGE

Bei der Bearbeitung von Blechen oder Bändern werden zunehmend höhere Qualitätsanforderungen an die Schnittkanten der zu schweißenden Teile gestellt, weil hierdurch am günstigsten eine für die Weiterverarbeitung geeignete blechebene Schweißnaht erzielt werden kann. Hinzu kommt, daß bei Blechen und Bändern im Dünnblechbereich ab 0,2 mm Blechstärke durch den zunehmenden Einsatz von Lasern als Schweißwerkzeug der Toleranzbereich der Schnittkanten eingeschränkt ist. Um die verlangte Qualität der Schnittkanten zu erreichen, ist neben einer exakt geführten Schere, wie sie aus der DE 30 44 350 C3 bekannt ist, auch eine reproduzierbare Einstellung von deren Schnittkanten erforderlich. Eine derartige doppelschnittige Schere besteht aus einem schwenkbaren Scherbalken, der die Obermesser trägt und den auf einem Untermesserbalken angeordneten Untermessern. Bei jeder Änderung der Blech- bzw. Banddicke müssen für die optimale Schnittkantenausbildung die Untermesser zu den Obermessern neu eingestellt werden.

Der Erfindung liegt daher die Aufgabe zugrunde, eine Einstelleinrichtung für die Schermesser einer Band- oder Blechplatten-Schweißanlage zu schaffen, mit der eine Präzisionskantenvorbereitung ohne manuellen Eingriff in die Maschine erreicht wird.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Durch die erfindungsgemäße spielfreie Verbindung jedes Untermessers mit einer Verschiebeeinheit, die von einem Steuergerät aus über einen Antrieb verschiebbar ist, wird die Sicherheit bei der Einstellung der Schnittkanten der Schere erheblich verbessert, da die Bedienungsperson nicht innerhalb der Maschine Einstellarbeiten an den Untermessern vornehmen muß.

Ein weiterer Vorteil besteht darin, daß während des Banddurchlaufes die Einstellung erfolgen kann, wodurch Zeitverluste vermieden werden. Die spielfreie Verbindung ermöglicht eine Vorwahl des Schneidspaltes mit einer Auflösung von typisch 0,01 mm.

Die Verschiebeeinheit weist einen Keilschieber auf, dessen Herstellung relativ einfach ist, da lediglich alle Langlöcher in einer Spannung gefräst bzw. geschliffen werden müssen, damit der Schrägungswinkel aller Langlöcher gleich ist. Toleranzen bezüglich der Lage der Langlöcher werden erfindungsgemäß durch Drehen und Schieben der einstellbaren Keilbolzen bei der Montage kompensiert. Die beiden festen Keilbolzen am jeweiligen Ende der Messerplatte bestimmen dabei deren Position zum Untermesserbalken.

Ein Ausführungsbeispiel der Erfindung ist in der Zeichnung dargestellt und wird im folgenden näher beschrieben.

Es zeigen

Fig. 1     eine erfindungsgemäße Verschiebeeinheit in der Draufsicht

Fig. 2     einen Schnitt entlang der Linie A-A der Fig. 1

Fig. 3     eine erfindungsgemäße Ausbildung des Keilschiebers mit der unter einem Schrägwinkel verlaufenden Fläche

Fig. 4     eine erfindungsgemäße Blockiereinrichtung

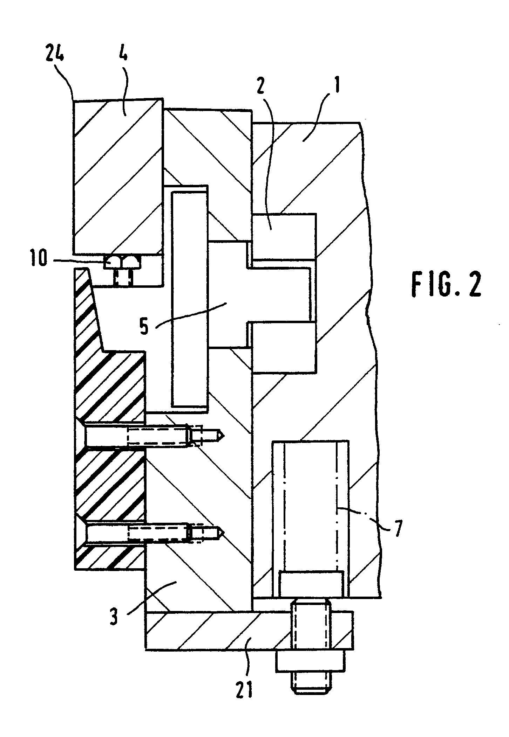

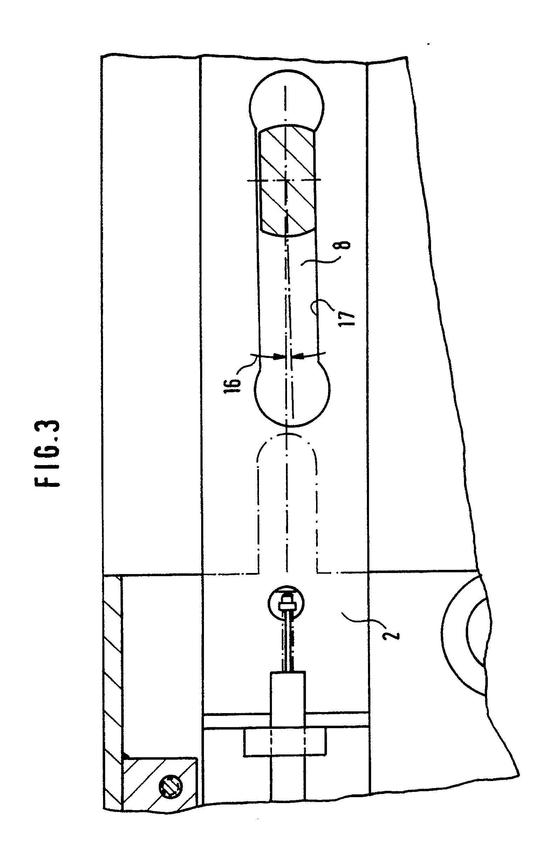

Als Träger der Verschiebeeinheit ist in den Fig. 1 bis 3 ein Untermesserbalken 1 dargestellt. Darin ist in einer Längsnut eingelassen der Keilschieber 2. Auf der Oberseite des Untermesserbalkens 1 ist zur Schneidkante 24 verschiebbar gelagert die Messerplatte 3, auf letztere aufgeschraubt das Untermesser 4. In der Messerplatte 3 sind zwei Keilbolzen 5a und 5b fest (fix) und in Abhängigkeit von der Länge des Untermessers 4 mindestens einer in der Regel jedoch mehrere Keilbolzen 6 einstellbar gelagert. Diese Keilbolzen 6 stellen die Verbindung zwischen Messerplatte 3 und Keilschieber 2 her. Sie übertragen sowohl die Stellkräfte als auch den Seitendruck während des Schneidvorganges. In Richtung des Seitendruckes sind Messerplatte 3, Keilschieber 2 und Keilbolzen 5 und 6 durch Federn 7 vorgespannt, um jegliches Spiel auszuschließen. Die Federn 7 sind im Untermesserbalken 1 gelagert und wirken auf einen mit der Messerplatte 3 verbundenen Arm 21. Der Keilschieber weist über die Länge verteilt mehrere schräggestellte Langlöcher 8 auf; deren Schrägstellung beträgt beispielsweise 1 mm auf 50 mm Schiebelänge und stellt die Grundübersetzung dar. Alle Langlöcher weisen durch ihre Schrägstellung mindestens eine unter gleichem Schrägungswinkel 16 verlaufende Fläche 17 auf, an denen die zwei festen und mindestens ein einstellbar mit der Messerplatte 3 verbundene Keilbolzen 5, 6 spielfrei zur Anlage gebracht werden. Toleranzen bezüglich der Lage der Langlöcher 8 werden erfindungsgemäß durch "Eintaumeln" (Drehen und Schieben) der losen Keilbolzen 6 bei Montage kompensiert. Anschließend werden die Keilbolzen 5 mit Einstellelementen 20 an die Fläche 17 gestellt und mittels Schrauben an der Messerplatte 3 befestigt. Die beiden festen Keilbolzen 5a und 5b am jeweiligen Ende der Messerplatte 3 bestimmen dabei deren Position zum Untermesserbalken 1.

Die Verstellung des Keilschiebers 2 erfolgt durch einen von einem Steuergerät 15 aus betätigbaren Antrieb, vorzugsweise einen Hydro-Zylinder 9; bei voll ausgefahrener Kolbenstange ist die Messerplatte 3 beispielsweise 1 mm vorgefahren, dieses ist die Spalt "0"-Stellung, d. h. das bzw. die Untermesser 4 werden jetzt mit den Stellschrauben 10 gegen das bzw. die nicht näher dargestellten Obermesser der Schere angedrückt und mit den Schrauben 11 (in Fig. 1 ist aus Übersichtsgründen nur eine Schraube 11 dargestellt) gespannt. Der Weggeber 12 wird so justiert, daß die Anzeige 22 des Steuergerätes 15 "0" aufweist. Nun läßt sich der gewünschte Spalt durch einfaches "Taster-Tippen" 25 mit einer Zeit-Auflösung von z. B. 0,01 mm/Sekunde einstellen. Die Steuerleitungen zu dem Hydro-Zylinder 9 und dem Weggeber sind mit 26, 27 bezeichnet.

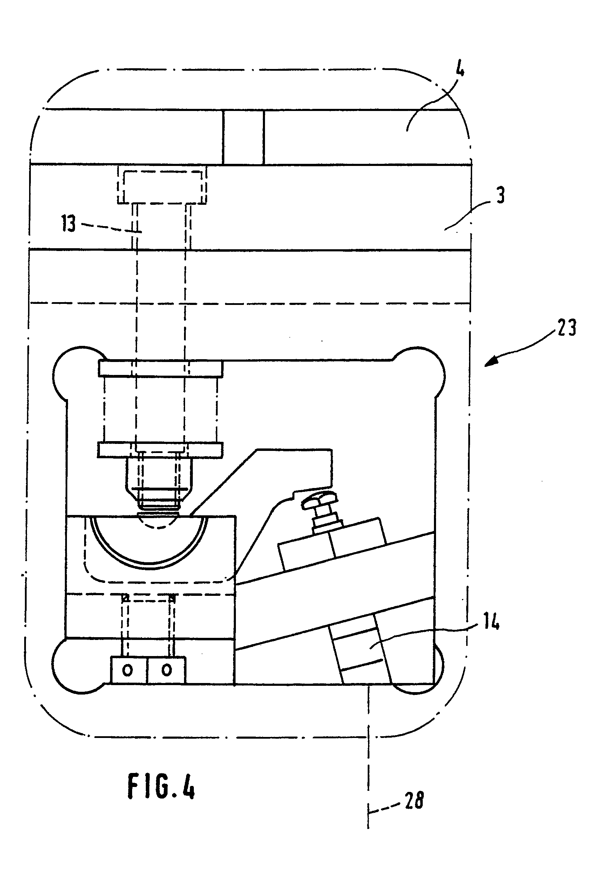

Um jegliches "Wandern" nach erfolgter Spalteinstellung auszuschließen, wird die Messerplatte 3 durch eine Blockiereinrichtung 23 (Fig. 4) auf dem Untermesserbalken 1 festgespannt. Die Blockiereinrichtung 23 besteht aus zwei federbelasteten Paßbolzen 13. Die aus der Blockierung entstehenden Reibkräfte sind dabei so groß, daß weder Erschütterungen noch unkontrollierter Druckaufbau im Hydro-Zylinder 9 eine Lageänderung der Messerplatte 3 bewirken können. Diese Blockierung wird vor jeder Spaltverstellung durch die hydromeachnischen Einheiten 14 aufgehoben. Die hydromeachnischen Einheiten 14 sind über die Steuerleitung 28 mit dem Steuergerät 15 verbunden und von diesem aus betätigbar.

Mit der Erfindung wird eine Einrichtung geschaffen, die es ermöglicht, den Schneidspaltbereich von beispielsweise 0 bis 1 mm mit hoher Genauigkeit stufenlos einzustellen,wobei die Spaltgröße mit einer Auflösung von typisch 0,01 mm außerhalb der Band- oder Blechplatten-Schweißanlage an einem Steuergerät 15 vorgewählt und angezeigt wird (Fernbedienung).

## Ansprüche

1. Einstelleinrichtung für Untermesser einer Schere in einer Band- oder Blechplatten-Schweißanlage,
dadurch gekennzeichnet,
daß jedes Untermesser (4) mit einer Verschiebeeinheit (2, 3, 5, 9) spielfrei in Verbindung steht, die von einem Steuergerät (15) aus über einen Antrieb (9) verschiebbar ist.

2. Einstelleinrichtung nach Anspruch 1,
dadurch gekennzeichnet,
daß die Verschiebeeinheit (2, 3, 5, 9) einen im Untermesserbalken (1) gelagerten Keilschieber (2) mit mindestens drei unter gleichem Schrägungswinkel (16) verlaufenden Flächen (17) aufweist, an denen zwei fest und mindestens ein einstellbar mit einer das Untermesser (4) tragenden Messerplatte (3) verbundene Keilbolzen spielfrei anliegen.

3. Einstelleinrichtung nach Anspruch 1 oder 2,
dadurch gekennzeichnet,
daß die einstellbar mit der Messerplatte (3) verbundenen Keilbolzen (6) zwischen den beiden fest angeordneten Keilbolzen (5) angeordnet sind.

4. Einstelleinrichtung nach einem der Ansprüche 1 bis 3,
dadurch gekennzeichnet,
daß die Flächen (17) innerhalb des Keilschiebers (2) als Langlöcher (8) ausgebildet sind.

5. Einstelleinrichtung nach einem der Ansprüche 1 bis 4,
dadurch gekennzeichnet,
daß in der Messerplatte (3) Einstellelemente (20) angeordnet sind, mittels denen die einstellbaren Keilbolzen (6) spielfrei an die Flächen (17) anlegbar sind.

6. Einstelleinrichtung nach einem der Ansprüche 1 bis 5,
dadurch gekennzeichnet,
daß die Messerplatte (3) die Keilbolzen (5, 6) und der Keilschieber (2) in Richtung der Anlageflächen (17) vorspannbar sind.

7. Einstelleinrichtung nach einem der Ansprüche 1 bis 6,
dadurch gekennzeichnet,
daß die Vorspannung über eine im Untermesserbalken (1) gelagerte Feder (7) erfolgt, die auf einen mit der Messerplatte (3) verbundenen Arm (21) wirkt.

8. Einstelleinrichtung nach einem der Ansprüche 1 bis 7,
dadurch gekennzeichnet,
daß dem Keilschieber (2) ein Weggeber (12) zugeordnet ist, der mit einer im Steuergerät (15) vorgesehenen Anzeige (22) verbunden ist.

9. Einstelleinrichtung nach einem der Ansprüche 1 bis 8,
dadurch gekennzeichnet,
daß der Messerplatte (3) eine Blockiereinrichtung (23) zum Verhindern einer unkontrollierten Lageänderung nach erfolgter Schneidspalteinstellung zugeordnet ist.

10. Einstelleinrichtung nach einem der Ansprüche 1 bis 9,
dadurch gekennzeichnet,
daß die Blockiereinrichtung (23) von dem Steuergerät (15) aus betätigbar ist.

FIG.1

EP 0 431 367 A2

FIG. 2

FIG.3

FIG.4